# EUROPEAN PATENT APPLICATION

(11) **EP 1 517 535 A1**
(43) Date of publication of application: **23.03.2005**
(21) Application number: 04255677.9
(22) Date of filing: 17.09.2004
(51) Int. Cl.: H04N 1/00

(54) **Communication terminal and control method**

(30) Priority: 19.09.2003 JP 2003329090
(71) Applicant: Ricoh Company, Ltd., Tokyo 143-8555 (JP)
(72) Inventor: Tsukioka, Yasunori, Atsugi-shi Kanagawa-ken 240-0037 (JP)
(74) Representative: Leeming, John Gerard

(57) **Abstract**

A communication terminal includes a FAX transmission unit, a network FAX transmission unit, an address book, anoptionsetting unit, and a control unit. The address book is adapted to register for each of one or more destinations a FAX number and an e-mail corresponding to the destination. The option setting unit sets a predetermined option for the FAX transmission unit in connection with registration of the FAX number in the address book. The control unit makes the option effective when the e-mail address is used by the network FAX transmission unit.

## Description

This application relates to a communication terminal, and more particularly, a communication terminal capable of selecting a prescribed option.

As one example, an address book for registering addresses of destinations is often a popular feature of a facsimile terminal or a multifunction printer including a copy function, a scanner function, and a facsimile function. A FAX number and an e-mail address of a corresponding destination may be registered for the destination in the address book. However, an option set for a registered FAX number in some instances may not apply to registration of an e-mail address. For example, an e-mail address may be used in connection with image data output from the scanner and a FAX option is typically not used in connection with the scanner. Therefore, when a facsimile transmitted image attached to an e-mail is transmitted to an e-mail address (i.e., internet facsimile transmission), there is often a problem that a FAX option cannot be set.

On the other hand, if an option set in connection with registration of a FAX number is effective for registration of an e-mail address, a problem that the FAX option cannot be rendered ineffective to the scanner occurs because the e-mail address is used in the scanner (i.e., Scan-to-email), too. For example, the function of selecting a sender name and the function of inserting an address are unnecessary functions to the scanner because those (sender name, address) are overwritten at the header of image.

In the related art, for example, commonly-owned published Japanese patent application NO. Hei 11-027313 describes a network facsimile unit which obtains an e-mail address from a scanned image of a business card. More specifically, the network facsimile unit processes the image in which the e-mail address is written. However, Japanese patent application no. Hei 11-027313 does not mention a FAX option.

According to another proposed system, an address book capable of registering plural item data corresponding to one name data is provided, wherein the name data and the items are displayed in pairs as the result of a search. However, the proposed system bears no relation to a FAX option.

Accordingly, an object of this application is to provide a communication terminal adapted for setting a FAX option which can be effective when transmitting a facsimile image through the network.

Another object of this application is to provide a communication terminal adapted for setting a FAX option which is ineffective when transmitting a scanned image.

In order to achieve the above objects and other objects, according to an embodiment of this application, a communication terminal including a FAX transmission unit and a network FAX transmission unit, includes an address book adapted to register for each of one or more destinations a FAX number and an e-mail address corresponding to the destination, an option setting unit configured for setting a predetermined option for the FAX transmission unit in connection with registration of the FAX number in the address book, and a control unit configured to make the set option effective when the e-mail address is used by the network FAX transmission unit.

Furthermore, according to another embodiment of this application, a communication terminal including a FAX transmission unit, a network FAX transmission unit and a network scanner, includes an address book adapted to register for each of one or more destinations a FAX number corresponding to the destination, and an e-mail address to be used at the network scanner and the network FAX transmission unit, an option setting unit configured for setting a predetermined option for the FAX transmission unit in connection with registration of the FAX number in the address book, and a control unit configured to make the set option ineffective when the e-mail address is used by the network scanner.

These and other objects, features and advantages of this application will become apparent upon consideration of the following description of the preferred embodiments of this application, taken in conjunction with the accompanying drawing(s).
Figure 1 is a block diagram of an apparatus for a communication terminal, according to an exemplary embodiment of this application;
Figure 2 is a flow chart showing an example of control of image transmission by the communication terminal in the embodiment of Fig. 1;
Figure 3 is a block diagram of the communication terminal in the embodiment of Fig. 1;
Figure 4 is a flow chart showing a registration and a setting process in an address book;
Figure 5 is an exemplary address book setting screen displayed in an operation/display unit of the communication terminal in the exemplary embodiment shown in Fig. 3;
Figure 6 is an exemplary e-mail address setting screen displayed when an e-mail destination button of the address book setting screen shown in Fig. 5 is selected;
Figure 7 is an exemplary FAX number setting screen displayed when a FAX destination button of the address book setting screen shown in Fig. 5 is selected;
Figure 8 is an exemplary sender name selection setting screen when a sender name selecting button in the FAX number setting screen of Fig. 7 is pushed;
Figure 9 is an exemplary destination name insetting screen when the destination name inset button in the exemplary FAX number setting screen of Fig. 7 is pushed;
Figure 10 is a flow chart showing an example of control of image transmission by the communication terminal in the embodiment of Fig. 3; and
Figure 11 is a block diagram of a communication terminal system according to one exemplary embodiment of this application.

This application relates to tools (for example, apparatuses, methodologies and systems) for a communication terminal and for controlling the communication terminal. The tools maybe embodied in one or more computer programs which are stored in a program storage unit and/or transmitted through a network (such as the Internet, a wide area network, a local area network, etc.).

An apparatus for a communication terminal which includes a FAX transmission unit and network FAX transmission unit according to an exemplary embodiment of this application will be explained below.

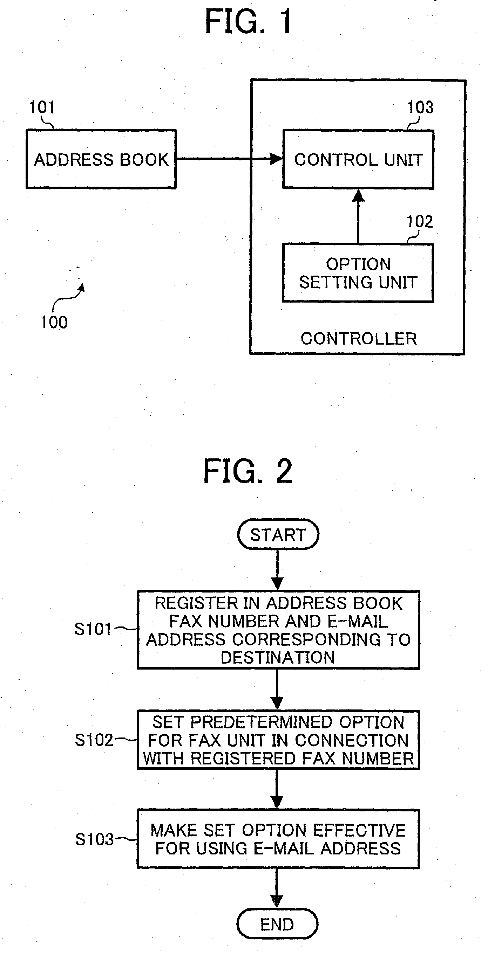

Figure 1 illustrates a block diagram of an apparatus for a communication terminal, according to an exemplary embodiment of this application. Apparatus 100 includes an address book 101, an option setting unit 202 and a control unit 103. The address book 101 registers for each of one or more destinations a FAX number and an e-mail address corresponding to the destination. The option setting unit 102 is configured for setting (in response to user input) one or more predetermined options for the FAX transmission unit in connection with registration of the FAX number in the address book. The control unit 103 makes the set option effective when the e-mail address is used by the network FAX transmission unit. The option setting unit 102 and control unit 103 may be components of a programmer controller.

Figure 2 is a flow chart showing an example of control of image transmission by the communication terminal in the embodiment of Fig. 1. A method for controlling a communication terminal including a FAX unit and a network FAX unit, according to an exemplary embodiment, will be explained below with reference to Fig. 1 and Fig. 2. For each of one or more destinations, a FAX number and an e-mail address corresponding to the destination are registered in the address book 101 stored in the communication terminal 100 (step S101) . A predetermined option is set (according to user input) for the FAX unit in connection with registering the FAX number in the address book 101 (step S102). The set option is made effective when the e-mail address is used at the network FAX unit (step S103)

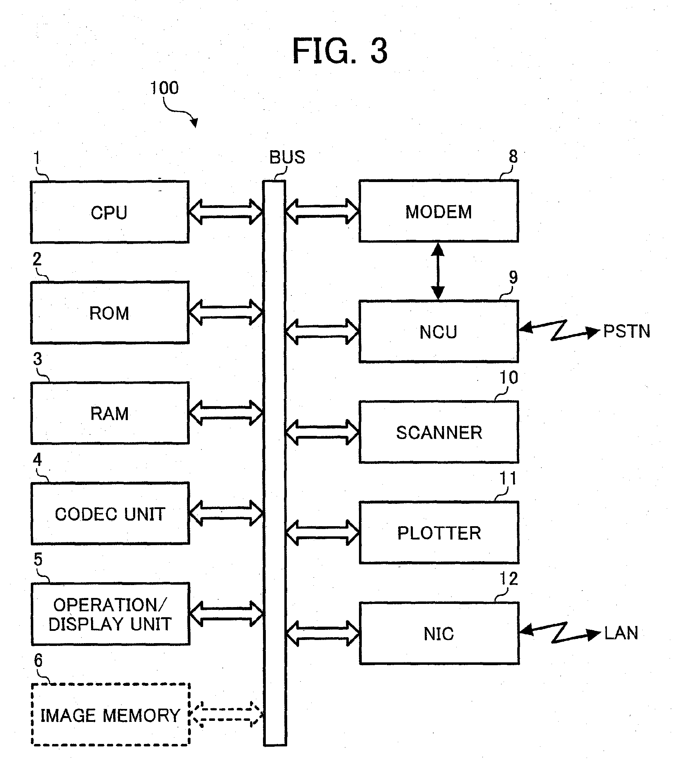

Additional exemplary embodiments will be explained below with reference to Figs. 3-11.

Figure 3 shows a block diagram of an apparatus for a communication terminal 100, according to an embodiment of this application. The communication terminal 100 is, for example, a facsimile unit including a network FAX function, a facsimile unit including a net work FAX function and a scan-to-email function, a multifunction printer including a network FAX function, a scan-to-email function and a copy function, etc. As shown in Fig. 3, the communication terminal 100 includes a CPU 1, a ROM 2, a RAM 3, a CODEC unit (i.e., coder decoder unit) 4, an operation/display unit 5 and an image memory 6 . The CPU 1 controls the communication terminal 100, including facsimile transmitting and receiving, registration of FAX numbers and e-mail addresses in the address book, and so on, according to a control program stored in the ROM 2. The CODEC unit 4 is a unit for coding image data and decoding coded image data. The operation/display unit 5 is a unit through which various data, such as for registering a destination, inputting a title, and so on, can be input.

The communication terminal 100 further includes a modem 8, a NCU (Network Control Unit) 9 for connecting to a G3 type facsimile through a PSTN (Public Switched Telephone Network), a scanner 10 for scanning a document (such as a manuscript), a plotter 11 for printing out an image corresponding to image data decoded by the CODEC unit 4, a NIC (Network Interface Card) 12 for connecting to a LAN (Local Area Network). In addition, a network accessed by the NIC 12 is not limited to the LAN, and may be instead an internet, a WAN, etc. In addition, the network may be a wired network or a wireless network.

The modem 8 transmits and receives a facsimile image through the PSTN via the NCU 9. The NCU 9 transmits a dial signal to the PSTN and responds to a ringing signal from the PSTN. The NIC 12 controls facsimile transmitting and receiving of an e-mail format image data through a LAN, transmitting an image data read by the scanner 10, and so on. Through the NIC 12, it is possible to transmit facsimile image data attached to an e-mail to a specified e-mail address (i.e., Internet FAX), and transmit scanned image data attached to an e-mail to a specified e-mail address (i.e., Scan-to-email function). In addition, an address book used by the FAX function or the scanner function can be stored in the ROM 2, such as a flash ROM which is capable of holding a data even if the power is off. In addition, the image memory 6 may be added to the communication terminal 100. The image memory 6 can be any of the conventional image storage units, such as a hard disk drive, a flash card, a SD (Secure Digital Memory Card) , etc. The principal use of the image memory 6 is storage of copy image data and facsimile image data. In addition, the data for the address book may be stored in the image memory 6.

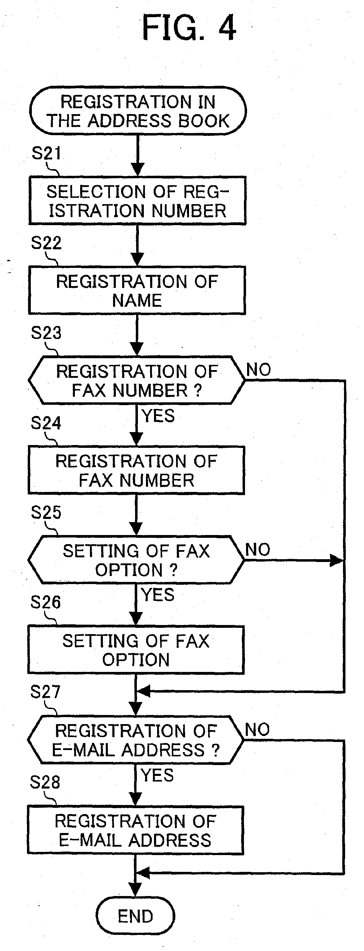

Figure 4 shows a flow chart showing a setting process for adding a registration to an address book. The process is carried out by the CPU 1 controlling the above-mentioned units 1 to 12.

When any of various data is to be registered in the address book, a registration number is selected from prescribed registration numbers (for example, 1 to N, although the address book is not limited to any particular size) stored in the address book (step S21), and then a name for the new registration is input (step S22) . Next, a FAX number and/or an e-mail address can be input for the registration. For inputting the FAX number, a numeric keypad (not shown) can be used if a FAX number is input by the user (YES in step S23), and then the FAX number is registered (step S24) . After the FAX number is registered, it is determined whether one or more options are selected (step S25).

The term "option" here includes, for example, sender name selection, destination name inset, etc. (as described below). Sender name selection is a process for selecting a prescribed first sender name or a prescribed second sender name and insetting the selected sender name into the transmitted image. Destination name inset is a process for insetting the name registered as a destination in the address book into the header of an image. The inset image can be, for example, "Mr. ABC". In addition, the inset position of the prescribed image in the transmitted image specified by the selected option is not limited to the header of the transmitted image. The inset position may be any position in the transmitted image. Furthermore, the option is not limited to sender name selection and destination name inset. The option may be any FAX option capable of being set for internet FAX transmission. The option may be a FAX option incapable of being set for the scan-to-email transmission.

After a FAX number and any options are set (step S26), it is determined whether an e-mail address is to be registered (step S27). If an e-mail address is to be registered (Yes in step S27), the e-mail address can be input through a keypad and then registered (step S28).

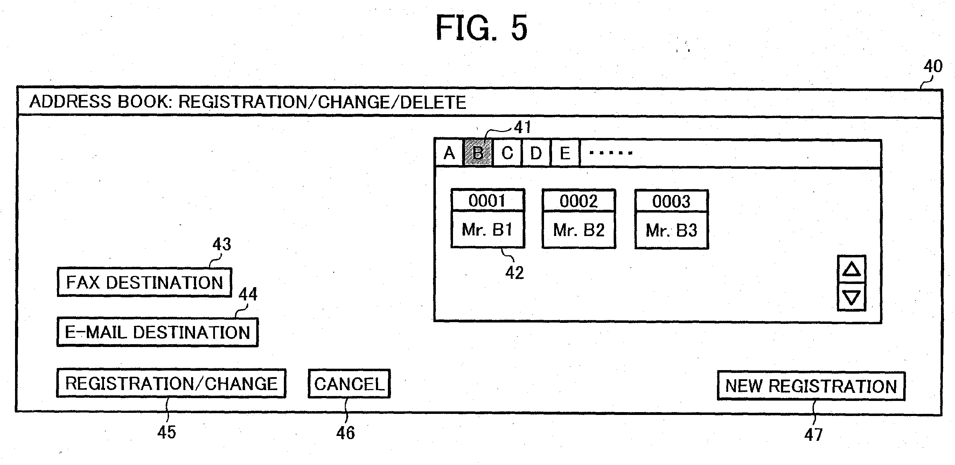

Figure 5 shows an exemplary address book setting screen 40 displayed in the operation/display unit 5 of the communication terminal 100. In the address book setting screen 40, an address list 41, a registration number button 42, a FAX destination button 43 and an e-mail destination button 44 are displayed. As shown in Fig. 5, the index "B" includes three registration number buttons (registration number 0001, registration number 0002, registration number 0003) corresponding to respective registrations. Any of the registration number buttons can be selected for modification of the corresponding registration. For example, after one of the registration number buttons is selected, the FAX destination button 43 can be selected to initiate a process to change/set a FAX number for the selected registration. Similarly, the e-mail destination button 44 can be selected to initiate a process to change/set an e-mail address for the selected registration. In addition, a registration/change button 45 for initiating a process to register or change various setting data (for example, user name, abbreviated user name, registration number, etc.), a cancel button 46 for initiating a process to cancel the selected registration, and a new registration button 47 for initiating a process to create a new registration are displayed in the address book setting screen 40. In addition, characters for various setting may be input through a numeric keypad (not shown) of the operation/display unit 5.

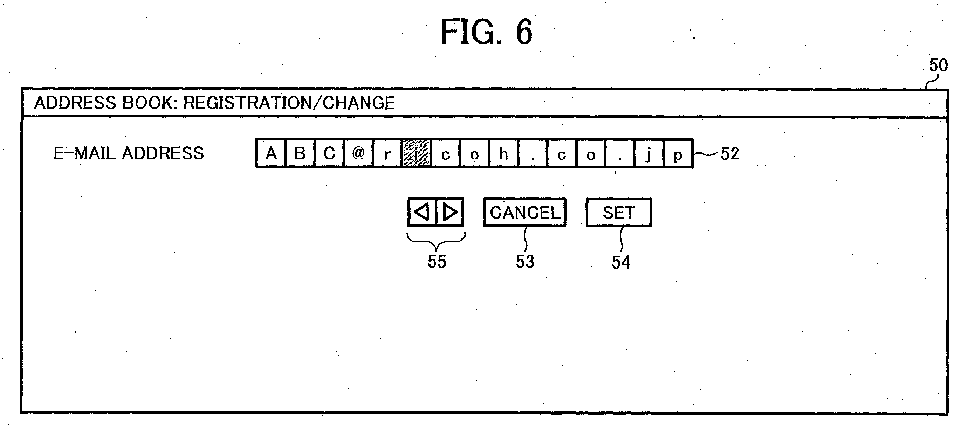

Figure 6 illustrates an exemplary e-mail destination setting screen 50 which can be displayed when the e-mail destination button 44 of the address book setting screen 40 is selected, in order to allow the user to change a registered e-mail address of a selected registration. In the e-mail destination setting screen 50, an e-mail address input area 52 for input of an e-mail address to be used for an internet FAX function or a scan-to-email function is displayed. The user can specify a new e-mail address for the selected registration by operating the keypad (not shown). The address shown in the input area 52 can be canceled by pressing the cancel button 53. After a desired new e-mail address is entered in the input area 52, the new address can be set for the selected registration by pressing the set button 54. Left and right arrow buttons 55 can be operated to move a cursor in the input area 52, as desired.

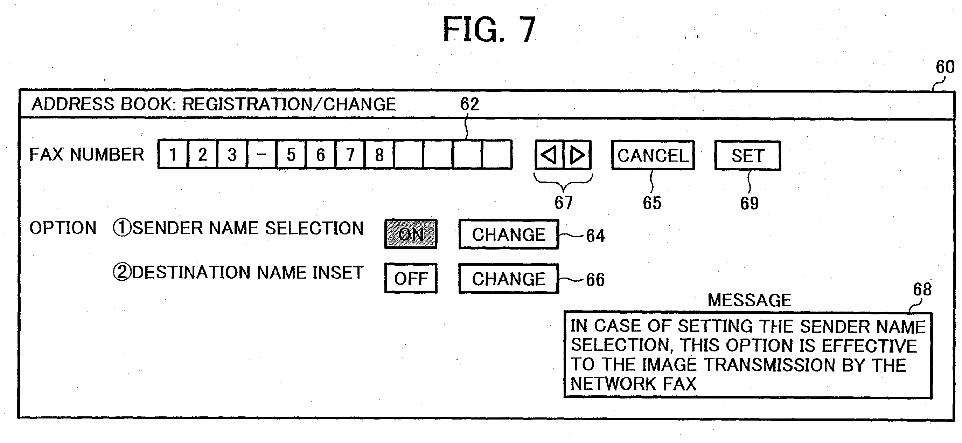

Figure 7 shows an exemplary FAX data setting screen 60 displayed when the FAX destination button 43 of the address book setting screen 40 is selected, in order to allow the user to change a FAX address of a selected registration. A FAX number input area 62, a sender name selection setting button 64 for setting a sender name option (that is, to include a sender name in a transmitted image) , a destination name inset setting button 66 for setting a destination name inset option, and a message area 68 for indicating various messages to a user are displayed in the FAX setting screen 60. For example, the message "In case of setting the sender name selection, this option is effective for image transmission by the network FAX" can be displayed in the message area 68. Left and right arrow buttons 67, a cancel button 65 and a set button 69 can be provided for input and setting a new FAX number for the selected registration. In addition, ON/OFF indicators may be displayed adjacent to the sender name selection setting button 64 and the destination name inset setting button 66. When the sender name selection setting button 64 or the destination name inset setting button 66 in Fig. 7 is pressed, a prescribed setting screen is displayed. The prescribed setting screen will be described below.

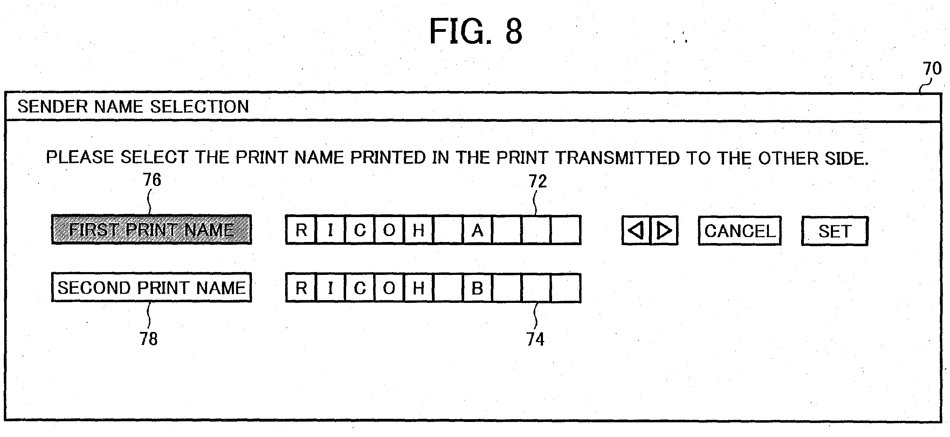

Figure 8 is an exemplary sender name selection setting screen 70 which can be displayed when the sender name selection setting button 64 in the FAX data setting screen 60 is pushed. A first print name input area 72 and a second print name input area 74, which indicate respective print names which can be printed in the header of the FAX image transmitted to the prescribed other side, are displayed in the sender name selection setting screen 70. For specifying a print name, either a first print name button 76 or a second print name button 78 may be selected. It should be apparent that the number of print name input areas is not limited to two. In addition, left and right arrow buttons, a cancel button and a set button can be provided (similar to the previous screens).

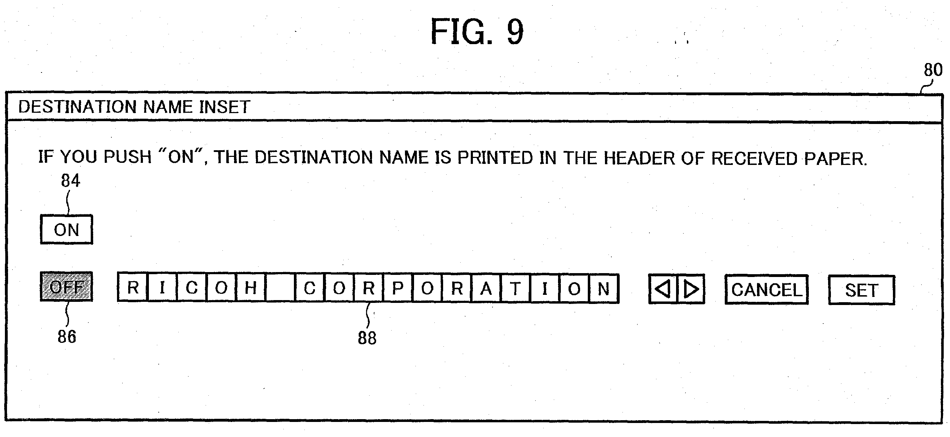

Figure 9 is an exemplary destination name inset setting screen 80 which can be displayed when the destination name inset setting button 66 in the FAX data setting screen 60 is pushed. An "ON" button 84 and an "OFF" button 86 for setting (that is, to ON) or resetting (that is, to OFF), respectively,the destination name inset option are displayed in the destination name inset setting screen 80. Furthermore, a destination input area 88 for input of a destination name which can be printed in a prescribed position of the FAX image transmitted to the other side is displayed. Again, left and right arrow buttons, a cancel button and a set button can be provided. A procedure for control of image transmission according to the FAX option set in the above-mentioned address book will be described below.

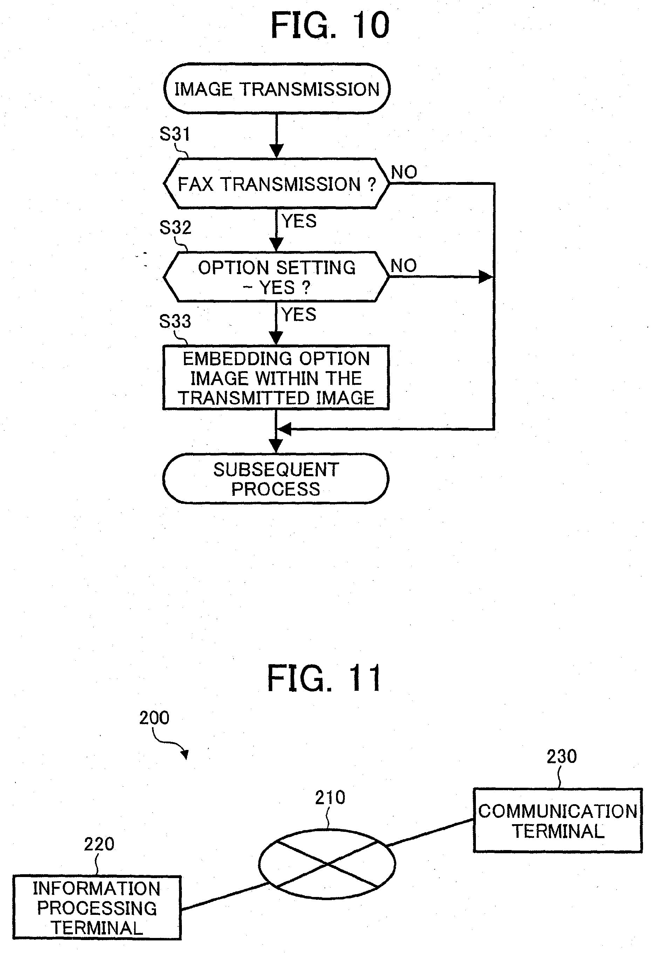

Figure 10 is a flow chart showing an example of control of image transmission by the communication terminal 100 according to the sender name selection option and destination name inset option. The communication terminal 100 insets one or more prescribed images set by the above-mentioned options (that is, sender name selection, destination name inset, etc.) into the transmitted image as follows. In the process of expanding the transmitted image, the CPU 1 determines whether the transmitted image is a FAX transmitted image including an internet FAX transmitted image (step S31) . If the transmitted image is a FAX transmitted image including an internet FAX transmitted image (YES in step S31), the CPU31 determines whether one or more of the options is set (step S32) . When at least one of the options is set (YES in step S32) , the prescribed image instructed by the set option is inset into the transmitted image, and then the image is transmitted (step S33). In addition, when the CPU1 determines that none of the options is set (NO in step S32), control is passed to the next process to be carried out. On the other hand, when the CPU1 determines the transmitted image is not a FAX transmitted image (NO in step S31), control is passed to the next process to be carried out. For example, the next process to be carried out may be to use the scanner (i.e., scan-to-email) without the CPU1 determining whether an option is set.

Figure 11 is a block diagram illustrating a communication terminal system 200 at a high level. The communication terminal system 200 includes an information processing terminal 220 and a communication terminal 230, which communicate with each other through a network 210. The network 210 can be, for example, an internet, a LAN, a WAN, etc. In addition, the network 210 may be a wired network or a wireless network. The information processing terminal 220 can be, for example, a PC (personal computer) including Web browser function, a PDA (personal data assistant) including Web browser function, etc. The communication terminal 230 is a terminal including the functions of the communication terminal 100 as described above. In addition, the communication terminal 230 has a network address which identifies the terminal 230 on the network (for example, an IP address).

A process for changing or setting various data in an address book stored in a memory of the communication terminal 230, from the information processing terminal 220, is described below. The IP address of the communication terminal 230 is input through the Web browser of the information processing terminal 220. The information processing terminal 220 accesses a memory are a storing the address book of the communication terminal 230 through the Web browser, and thereby can change or set the above-mentioned various data in the address book. Thus, changing or setting of various data in the address book may be carried out through an operation/display unit of the communication terminal 230, or through the Web browser of the information processing terminal 220 through the network 210.

Additional modifications and variations of the exemplary embodiments described above are possible in light of the above teachings. It is therefore to be understood that within the scope of the appended claims the invention may be practiced other than as specifically described herein. For example, one skilled in the art should understand that elements from different embodiments may be combined as desired. As another example, although the above embodiments are described exemplarily with sender name selection option and destination name inset option, it should be apparent that other options may be available.

This document claims priority and contains subj ect matter related to Japanese Patent Application No. 2003-329090 filed on September 19, 2003, respectively, the entire contents of which are herein incorporated by reference.

## Claims

1. A communication terminal including a FAX transmission unit and a network FAX transmission unit, comprising:
an address book adapted to register for each of one or more destinations a FAX number and an e-mail address corresponding to the destination;
option setting means configured for setting a predetermined option for the FAX transmission unit inconnection with registration of the FAX number in the address book; and
control means configured to make the set option effective when the e-mail address is used by the network FAX transmission unit.

2. A communication terminal including a FAX transmission unit, a network FAX transmission unit, and a network scanner, comprising:
an address book adapted to register for each of one or more destinations a FAX number corresponding to the destination, and an e-mail address to be used by the network scanner and the network FAX transmission unit;
option setting means configured for setting a predetermined option for the FAX transmission unit in connection with registration of the FAX number in the address book; and
control means configured to make the set option ineffective when the e-mail address is used by the network scanner.

3. The communication terminal according to claim 2,
wherein the network scanner is arranged to transmit image data through a network.

4. The communication terminal according to claim 1, 2 or 3,
wherein the FAX transmission unit is arranged to transmit an image signal through a public line.

5. The communication terminal according to claim 1, 2 or 3,
wherein the network FAX transmission unit transmits image data through a computer network.

6. The communication terminal according to anyone of claims 1 to 5, wherein the set option is sender name selection.

7. The communication terminal according to any one of claims 1 to 5, wherein the set option is destination name inset.

8. A method for controlling a communication terminal including a FAX unit and a network FAX unit, comprising the steps of:
registering, for each of one or more destinations, a FAX number and e-mail address for the corresponding destination, in an address book stored in the communication terminal;
setting a predetermined option for the FAX unit in connection with registering the FAX number in the address book;
making the set option effective when the e-mail address is used at the network FAX unit.

9. The method according to claim 8, further comprising:
transmitting image data through a computer network by the network FAX unit.

10. A method of controlling a communication terminal including a network scanner, a FAX unit and a network FAX unit, comprising the steps of:
registering, for each of one or more destinations, a FAX number corresponding to the destination, and an e-mail address to be used by the network scanner and the network FAX units, in an address book adapted o register the FAX number and e-mail address;
setting a predetermined option for the FAX unit in connection with registration of the FAX number in the address book; and
making the set option ineffective when the e-mail address is used at the network scanner.

11. The method according to claim 10, further comprising:
transmitting image data through a network by the network scanner.

12. The method according to any one of claims 8 to 11, further comprising:
transmitting an image signal through a public line by the FAX unit.

13. The method according to any one of claims 8 to 11, further comprising:
transmitting image data through a computer network by the network FAX unit.

14. A method of controlling a communication terminal including a FAX transmission unit and a network FAX transmission unit, comprising the steps of:
registering, for each of one or more destinations, a FAX number and an e-mail address for the corresponding destination, in an address book stored in the communication terminal;
setting a predetermined option for the FAX unit in connect ion with registering the FAX number in the address book;
making the set option effective when the e-mail address is used at the network FAX unit.

15. A method of controlling a communication terminal including a network scanner, a FAX transmission unit, and a network FAX transmission unit, comprising the steps for;
registering for each of one or more destinations a FAX number corresponding to the destination, and an e-mail address to be used at the network scanner and the network FAX unit;
setting a predetermined option for the FAX unit in connection with registering the FAX number in the address book;
making the set option ineffective when the e-mail address is used at the network FAX unit.

16. A computer data signal embodied in one or more segments transmitted in a transmission medium which includes instructions executable by a computer to perform the method claimed in any one of claims 8 to 15.

17. A program storage medium adapted to store a computer program for performing the method of any one of claims 8 to 15.

18. A system comprising
a processor; and
a program storage unit adapted to store a computer program to be executed by said processor for performing the method of any one of claims 8 to 15.

19. A communication terminal including a scanner, a copy unit, and a FAX unit,
the FAX unit including transmission means for transmitting an image signal through a public line and transmitting image data through an internet;
an address book being adapted to register in a memory, a FAX number and an e-mail address corresponding to a destination, the fax number and e-mail address be usable in common with the scanner, and;
wherein an option set when the registered FAX number is automatically effective when the e-mail is registered.

20. A communication terminal including a scanner, a copy unit, and a FAX unit,
the FAX unit including transmission means for transmitting an image signal through a public line and transmitting image data through an internet;
an address book being adapted to register in a memory, a FAX number and an e-mail address corresponding to a destination in common with the scanner;
wherein an option set when the registered FAX number is automatically effective when the e-mail is registered, and ineffective when the scanner transmits image data.
